# EUROPEAN PATENT APPLICATION

(11) **EP 2 784 663 A1**
(43) Date of publication of application: **01.10.2014**
(21) Application number: 13462009.5
(22) Date of filing: 19.12.2013
(51) Int. Cl.: G06F 9/44

(54) **Method system and computer program product for collecting, sending and following language requests for mobile applications**

(30) Priority: 26.03.2013 HU 1300174
(71) Applicant: Kiss, Laszlo, 1016 Budapest (HU)
(72) Inventor: Kiss, László, H-1016 Budapest (HU)
(74) Representative: Mak, Andras

(57) **Abstract**

The solution of the current invention supports gathering information about language need of the user. For this an application runs on a Mobile. Device, and as it is connected to a central server over a private network, a public network or over the internet, it can send the information about the language need.

With the help of this solution mobile device users can submit language requests for a new language related to a certain mobile device application that does not support the given language and the user would like that application to be available on that language.

The desired additional Default or Customized and/or Personalized UI sets may be downloaded, and made available for the Application to be set and used. Users have the possibility to anytime choose among the available User Interfaces, and switch from one to other.

As such a large variety of different Default or Customized and/or Personalized User Interface sets can be made available for users. As a result use of any Application will be possible using a User Interface setting best suitable for the User, without affecting a functionality of it.

## Description

### Background of the invention

### 1. Technical Field

The present invention relates in general to Mobile Applications installed and/or running on Mobile Devices, and in particular to satisfying the need of Users to be able to use the Mobile Applications in a language they feel comfortable with. Still more particularly, the present invention relates to the possibility to satisfy the Users' needs to check for availability of a desired language or customization version for a certain Mobile Application, send requests to make it available in the case the desired language or customization version is not available, and check the status of his/her requests already sent.

### 2. Description of the Related Art

Mobile Devices are not only increasingly used worldwide, but also by a large variety of users demanding the possibility to use these devices for different entertainment, social, learning or work purposes. Many users speak only their mother tongue, or speak English or other major language only at a low level, therefore have difficulties with comfortable use of their smartphones, as they are limited in the choice of Mobile Applications.

Such Users can chose only from those Mobile Applications which are available in the language they are comfortable with. These Users are excluded from the use of more comfortable, more fancy or more featured Applications, as they do not understand at all, or understand only limitedly the User Interface of these Applications.

Additionally, the potential need of these Users often remains hidden for the developers, as they usually can concentrate their limited efforts to the availability of the major languages. As such, a large segment of the potential market for a certain Application remains hidden for the developer, and also remains unserved, or served only at a lower level.

It would be desirable, therefore to provide a mechanism and system for the Users to formulate and send somehow what they desire or even request relative to a certain Application to be available in a new language, other than the existing ones. It would be also desirable to make possible for the Users to somehow follow the status of the requests they have formulated and sent.

And it would be desirable also to collect all these requests from the Users, and send them properly grouped to the concerned developers as additional market information.

And finally it would be desirable that the Users get a notification about the readiness of a previously requested language or customization.

For collecting sending and following language requests for Mobile Applications, or any similar activity, only a few solutions have been suggested.

US patent no 8,145,472 describes a computer based language translation system using a hybrid network of human and machine translators. In this system there is a translation request sending role. In this this system the input source text is broken into fragments, and each fragment is distributed by a server to the translators as part of a translation request.

US patent no. 8,301,865 describes a system and method to manage address translation requests. The method and system of this patent refers to translation requests related to memory addresses of a certain computer system.

### Glossary

**Communications Device:** a portable, mobile or fixed device which offers the possibility to be used for voice, data or video communications, and additionally to personal, business or entertainment purposes, and which may offer locally stored, downloaded, broadcasted or streamed media content to its user. The Communications Device usually has an Operating System, with a variety of preinstalled features, functions and applications, and offers the possibility for its user or to a third party, to install and run additional applications.

**Mobile Computing Device:** a portable or mobile device which may be used for personal, business or entertainment purposes. The device may offer locally stored, downloaded, broadcasted or streamed media content to its user, and additionally may offer the possibility to be used for voice, data or video communications, The Mobile Computing Device usually has an Operating System, with a variety of preinstalled features, functions and applications, and offers the possibility for its user or to a third party, to install and run additional applications.

**Mobile Device:** in the context of the suggested solution, we refer to a Communications Device or to a Mobile Computing Device with the collective term of Mobile Device.

**User Interface set (UI set):** User Interface of an application are usually built from various elements of various types (menus, texts, help files, graphical elements, sounds, voice prompts, gestures, etc.). A User Interface set (UI set) is a conglomerate of all the necessary and sufficient elements needed for the unlimited usages of all the functions and features of the application.

**Default UI set:** A UI set provided by the developer or distributor of the application, intended for broad user groups of the application.

**Customized and/or Personalized UI set:** A UI set, which is based on a Default UI set, but one, more, or all the elements were altered. Altering a UI set element may be materialized by changing the language of menus, texts, or changing the tonality or mood of the menus, texts, or changing the voice prompts, sounds, etc. The purpose of customizing and/or personalizing of the UI set is to obtain a new version of it, which makes the usage of the application possible, or more comfortable, or more fashionable (etc.) for the user. Enterprises may provide their employees with Customized UI sets using company standard wordings, sounds, graphics, different user groups may also build their own Customized UI set, and it is even possible for a family or a single person to create a Personalized UI set.

**Active UI set:** An application may be distributed with one or several Default UI sets, and the user may add several additional Default or Customized and/or Personalized UI sets. Nevertheless at one moment one single UI set is actively used by the application to communicate with the user. This is called Active UI set.

**Request Submitter:** This is the function running on the User's Mobile Device, as part of the suggested solution,

**Request Collection Server:** This is the central, server side application of the suggested solution. It may run on a physical or virtual server, located anywhere on a private or public network, in a private or public cloud.

**User:** The User of the Mobile Device on which the suggested solution runs

**Developer:** This term defines in this context the provider of Mobile Device Application.

**Mobile Device Application Market:** Any private or publicly available portal on a private or public network, or on the Internet dedicated to selling/buying, downloading, upgrading of Mobile Device Applications.

**Mobile Device Application Identifier:** any publicly used code aimed to identify Mobile Device Applications. It can be either a unique alphanumerical string or a link on any Mobile Device Application Market.

**Device Operating System:** operating system of the Mobile Device

### Summary of the invention

It is therefore one object of the present invention to provide an improved method, system and computer program product for collecting, sending and following language requests for Applications running on Mobile Devices.

It is a second object of the present invention to provide an improved method, system and computer program for sending and receiving notifications on availability of language requests.

It is another object of the present invention to provide an improved method, system and computer program product for the collection of geographical positions of requests initiated, and as such providing additional raw data about the needs.

The foregoing objects are achieved as described below.

User Interface elements (menus, texts, help files, graphical elements, sounds, voice prompts, gestures, etc.) are implemented in software components separate from the functional components containing all the functions which do not depend from the effective user of the Mobile Application. The Mobile Application may be then distributed, installed and used with one or several Default User Interface sets, with several languages.

Users may download additional Languages, Customized and/or Personalized User Interface sets from a Mobile Device Application Market.

Mobile Applications may or may not contain an embedded translation facilitator element, which allows a faster and easier incorporation of ready translations or language versions.

Mobile Device of the User may run a requester application, which makes it possible for the user to register into the system which is the subject of the current patent application. It also makes possible for the user to set his/her mother tongue and all the languages he/she is able to speak.

If a User tries to set in a translatable Mobile Application a language which is neither available locally, nor downloadable, with the solution offered by the present invention will be able to run a dedicated requester application on his/her Mobile Device, and send to a central server a request for the chosen, not yet available language to be created.

The requester application running on the Mobile Device makes also possible for the User to send translation request to the Request Collecting Server for any other application installed on his/her Mobile Device, or for any, not necessarily installed Applications available on a Mobile Device Application Market.

The requester application running on the Mobile Device is also able to collect and sent to the request collection server geographical data, providing as such additional marketing information for later processing, or for filtering false requests.

The requester application makes possible for the user to follow the status of his/her different requests, and download the ready language packs to his/her Mobile Device.

Data gathered by the request collecting server can be further processed, and may server as source for further marketing information.

### Brief Description of the drawings and images

The novel features believed characteristic of the invention are set forth in the appended claims. The invention itself however, as well as possible modes of use, further objects and advantages thereof, will best be understood by reference to the following detailed description of an illustrative embodiment when read in conjunction with the accompanying drawings and images, wherein:
**Fig. 1** depicts a block diagram of a Communications Device or a Mobile Computing Device on which an embodiment of the present invention may be implemented.
**Fig. 2** is an architectural overview of the solution, in accordance to the embodiment of the present invention.
**Fig. 3** is an architectural overview of the use cases, in accordance to the embodiment of the present invention.
**Fig. 4a to 4d** are diagrams showing the request submitter placed in various locations, in accordance to an embodiment of the present invention.

**Images 1 to 4** are screenshots of a possible embodiment of the present invention. Those skilled in the art will recognize, that several other embodiments of the present invention are possible, which may totally differ from the one represented by the images, both in form and function.

### Detailed description of the embodiments

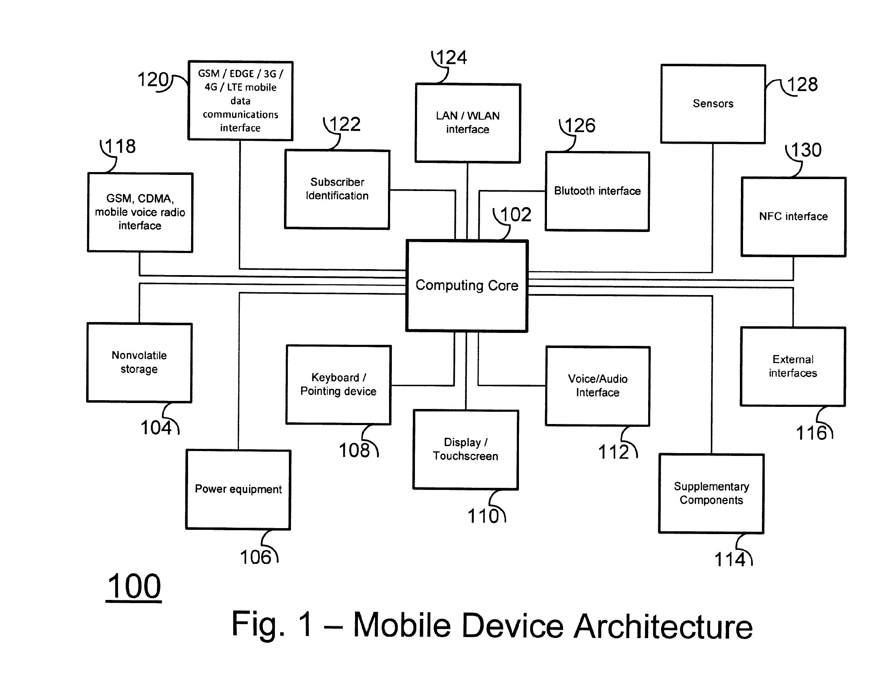

With reference now to the figures, and in particular with reference to **Fig. 1****,** a block diagram of a Mobile Device on which an embodiment of the present invention may be implemented is depicted. A Mobile Device **100** may be a full or partial implementation of the block diagram depicted in **Fig. 1****.** The central part of the Mobile Device is a Computing Core **102,** which provides all the computing elements, for example CPU, GPU, RAM, internal data and communications buses, chipsets, etc.

A Mobile Device includes several other elements connected to the central core. These are: non-volatile storage **104** (example: internal memory, SD card, etc.), power equipment **106** (example: battery, charging interface, solar panel, fuel cell, etc.), Keyboard/pointing device **108,** display/touchscreen **110,** voice/audio interfaces **112,** supplementary components **114** (example: front/rear camera, FM radio, TV receiver, infrared emitter/receiver), and external interfaces **116** (example: USB port, HDMI or other video output, vendor-specific connection ports, etc.). The other elements connected to the central core are radio interface for mobile voice **118** (example: GSM, CDMA, 3G, etc.), radio interface for mobile data connection **120** (example: GSM, EDGE, 3G, LTE, etc.), Subscriber Identification subsystem **122** (example: SIM card reader, integrated subscriber Id equipment, etc.), LAN/WLAN interface **124** (example: WiFi, Ethernet, etc.), Bluetooth interface **126,** sensors **128** (example: GPS, accelerometer, light, proximity, magnetic, thermic, pressure, orientation, humidity sensors, gyroscope, etc.), and NFC **130.**

Several of the above mentioned elements may or may not exist in the case of a concrete embodiment of a Mobile Device. Therefore the exemplary embodiment of a Mobile Device shown in **Fig. 1** is provided solely for the purpose of explaining the invention and those skilled in the art will recognize that numerous variations are possible, both in form and function.

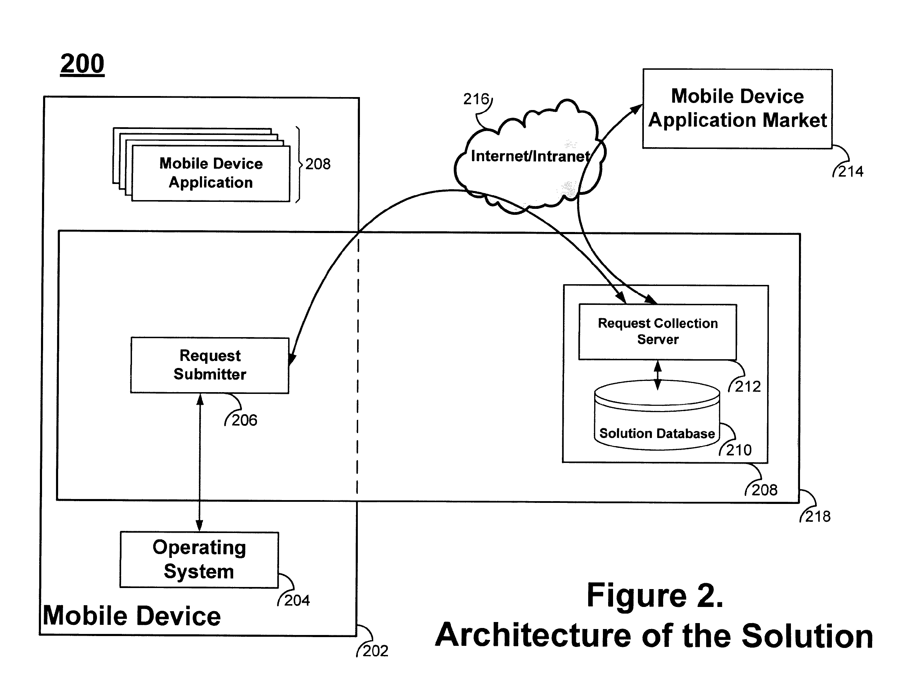

With reference now to **Fig. 2****,** a solution architecture in accordance with an embodiment of the present invention is depicted.

As readers may observe in **Fig. 2****,** the solution has a Request Submitter and a Request Collection part. Instances of Request Submitter Application **206** are installed and run on Mobile Devices **202.** Request Collection Server side **208** runs somewhere remote. Request Submitters **206** are connected to Server **212** over the Internet/Intranet **216.**

Each Request Submitter **206** communicates with the Operating System **204** of the same Mobile Device **202** on which it is installed.

The Request Collection Server **208** may communicate with several Mobile Device Application Markets **214** (subserviently with the most popular ones) over the Internet/Intranet **216.**

Request Submitter application **206** is available on Mobile Device Application Markets **214** and can be downloaded from there by the User similarly to any common Mobile Device Application **208.** Request Submitter **206** communicates with Request Collection Server **212** using any standard (for example HTTP, HTTPS) protocol. It has a GUI to receive transaction from its User and displays necessary information.

Request Collection Server **212** is a server software, running on a remote machine, anywhere on a private or public network or cloud. Request Submitter applications **206** running on many Mobile Devices **202** communicate with it using any standard (for example HTTP. HTTPS) protocol. Manages transactions initiated by users on Mobile Devices **202** using Request Submitter application **206.**

Request Collection Database (Solution Database) 208 stores all the data related to the operation of Request Collection Server. These data are related to different aspects of languages of Mobile Device Applications. In addition it stores data of registered users and their transactions.

Those skilled in the art will recognize, that several communication protocols are possible between a Request Submitter and a Request Collection Server.

### Operation of the system

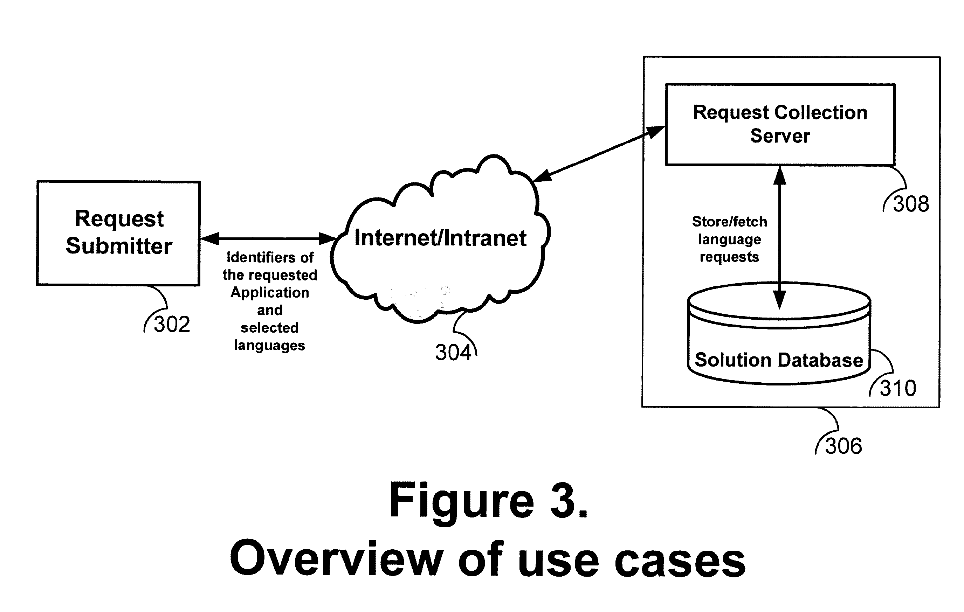

Following, on a possible embodiment of the present invention, we present the detailed operation of the solution. The example embodiment is solely used for explaining the concept, and those skilled in the art will recognize, that several other realizations are possible. For explanation reasons, we refer here to **Fig. 2** (Solution Architecture) and **Fig. 3****.** (Overview of Use Cases)

### User registration

A User optionally can register into the Request Collection Server **212** via his/her Request Submitter **206** after it was downloaded to its Mobile Device **202.**

Registration is not a prerequisite to any other usage by a User. User provides his/her username, password, languages he/she knows.

User registration is a purely optional function, some embodiments of the present invention may offer additional services to the registered users. But several other embodiments are possible, where User registration is not needed.

### User Location

User have the possibility to set his/her permission/prohibition to provide geographical coordinates from the location of his/her Mobile Device for further usage. Location information is taken from Mobile Device's Operating System **202** based GPS data.

Then these data are stored in the Solution (Request Collection) Database **210.**

### Language Request

A segment of Mobile Device Applications **208** contains texts or phrases on its Graphical User Interface (GUI). A Mobile Device Application **208** is considered to support a language when all texts, phrases built on its Graphical User Interface (GUI) appear on that language. A part of Mobile Device Applications support several languages, a concrete language of a certain copy generally depends the user's choice or (home) location.

A User of the solution which is an embodiment of the present invention can submit a language request, if founds that a given Mobile Device Application does not support a language he/she would like to use for that Application.

### Submission of a translation request in application lists

The Request Submitter Application which realizes a possible embodiment of the current invention, provides its User with the possibility to browse the Mobile Device Applications **208** installed on his/her own Mobile Device **202.**

These Mobile Device Applications **208** can be already translatable ones, with the necessary information and data stored on the Request Collector (Solution) Server Database **210** or just installed on the Mobile Device **202.**

As shown on **Image 1,** the Request Submitter application **302** in an example embodiment of the solution displays these applications in various tabbed browser modes as lists.

It is possible to request a translation for applications displayed in these list using the following method.
- In various application lists the user can request application translation pressing a "star" icon in the line of the application.
- The functionality is also available clicking on the "star" icon on the quick action bar displayed when the user clicks on the icon of the translatable application.
- The functionality may be also available clicking on the name of the application depending on the type of the list.
- No matter which way the user activates this function, the application displays a dialog where the user can select the language or languages he/she wants the translation in, as shown in **Fig. 2****.**
- If the requested application is not yet in the Solution Database **310** (e.g. in case of an application list that shows installed applications) the meta-data of the application (icon, name, etc.) is uploaded to the server if available for further use.

### Submission of a translation request for an unknown application

If the system knows nothing about an application it is still possible to request a translation for that using a form displayed e.g. as a tab of a browser mode.

As shown in **Fig. 3****,** the user can provide information like URL or name about the application, and a corresponding record will be created on the server.

### Review of requested translations

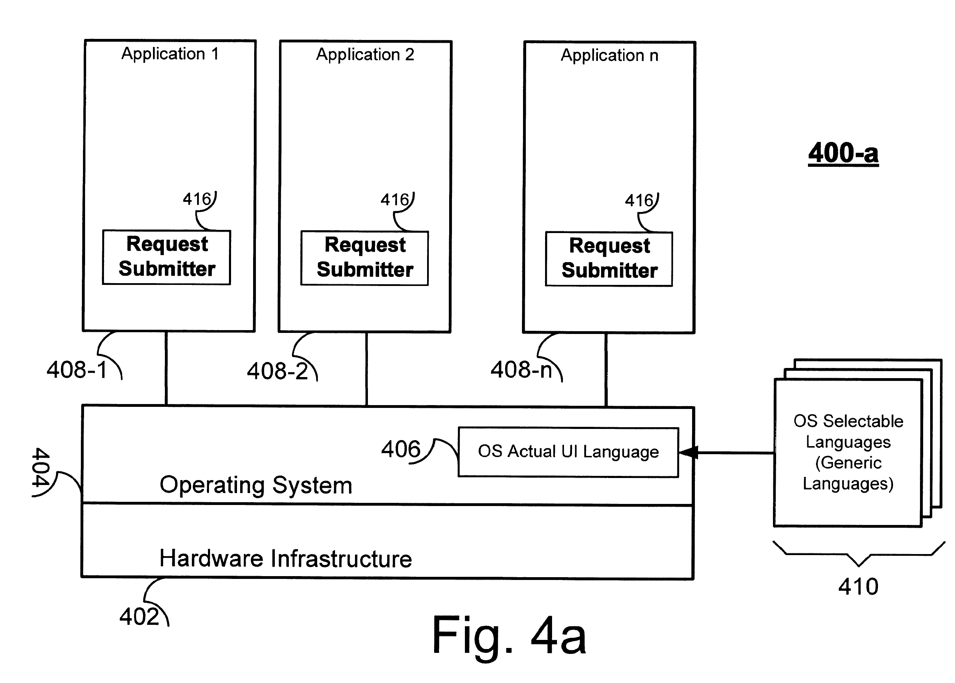

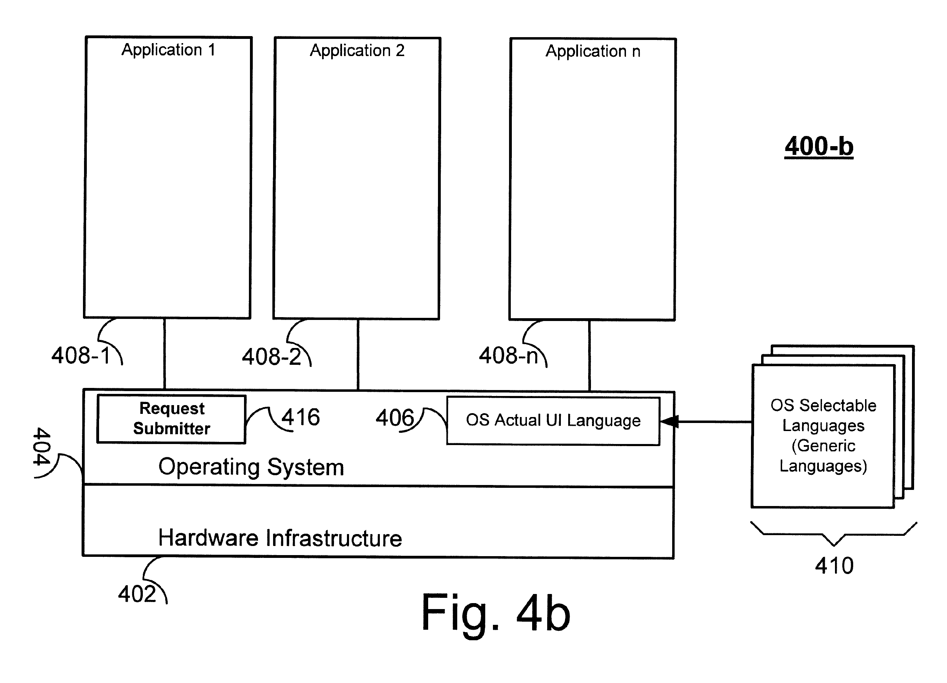

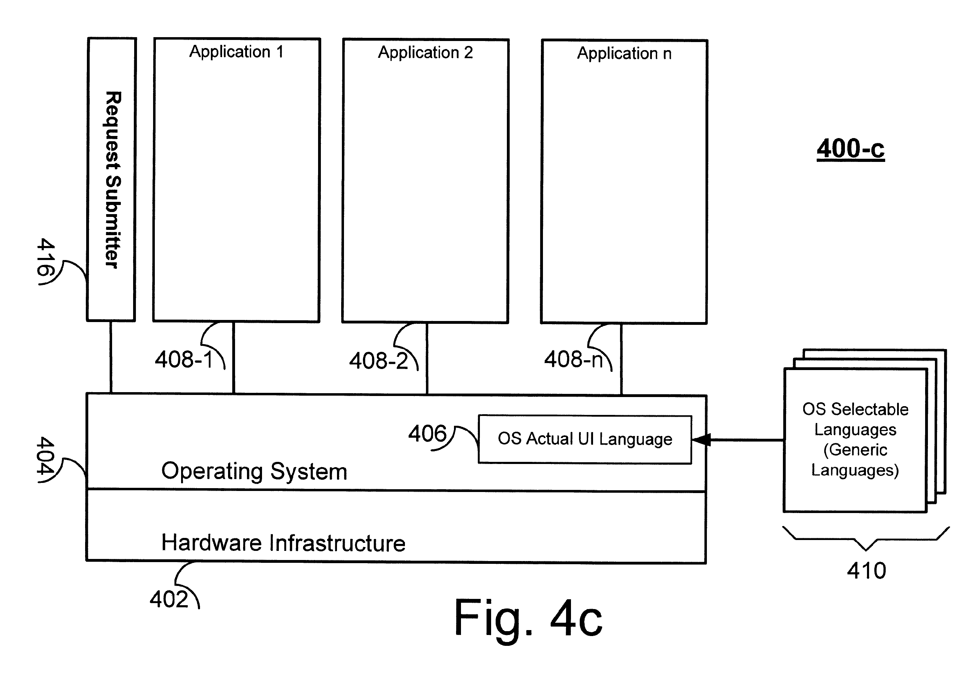

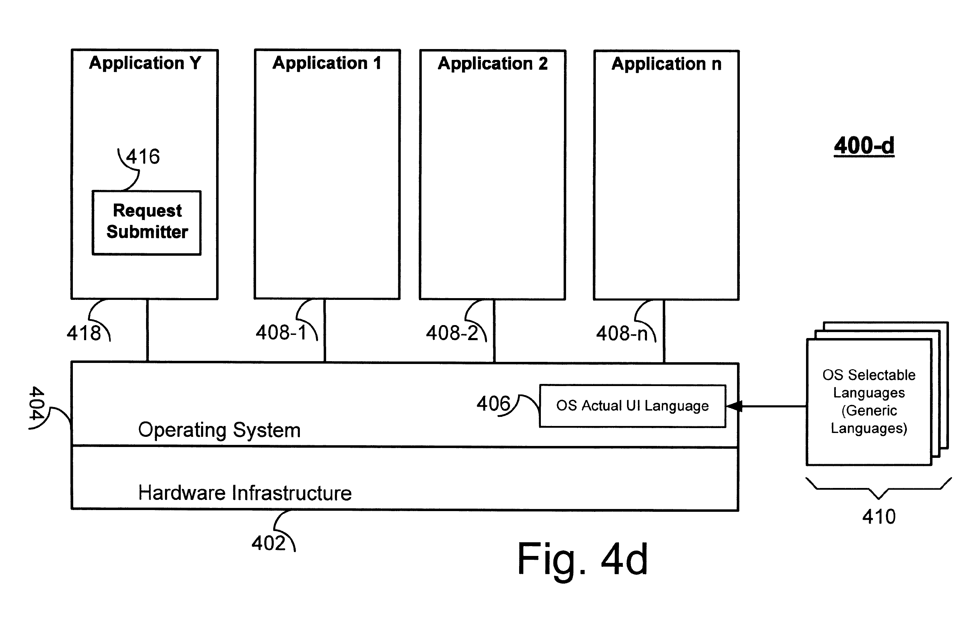

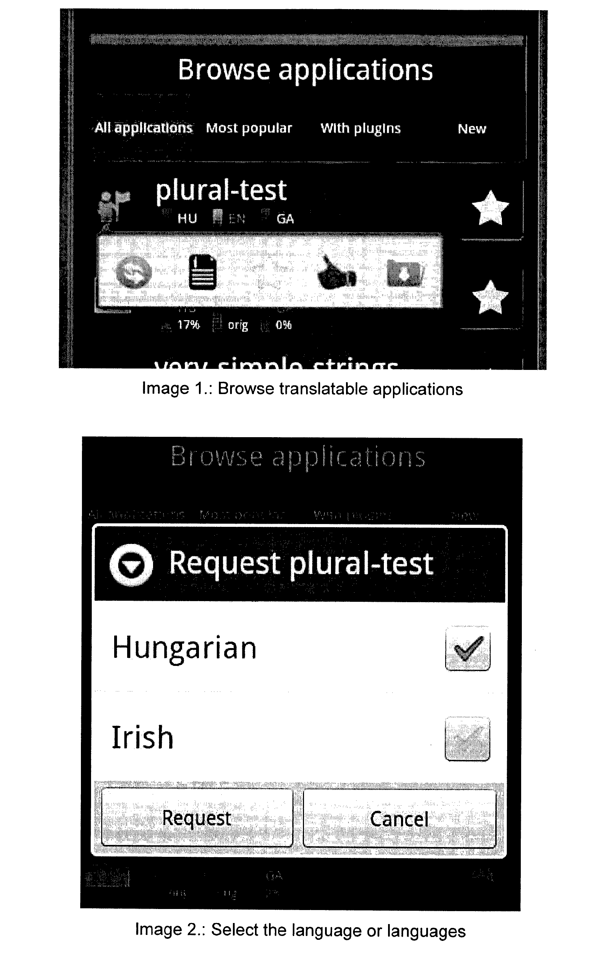

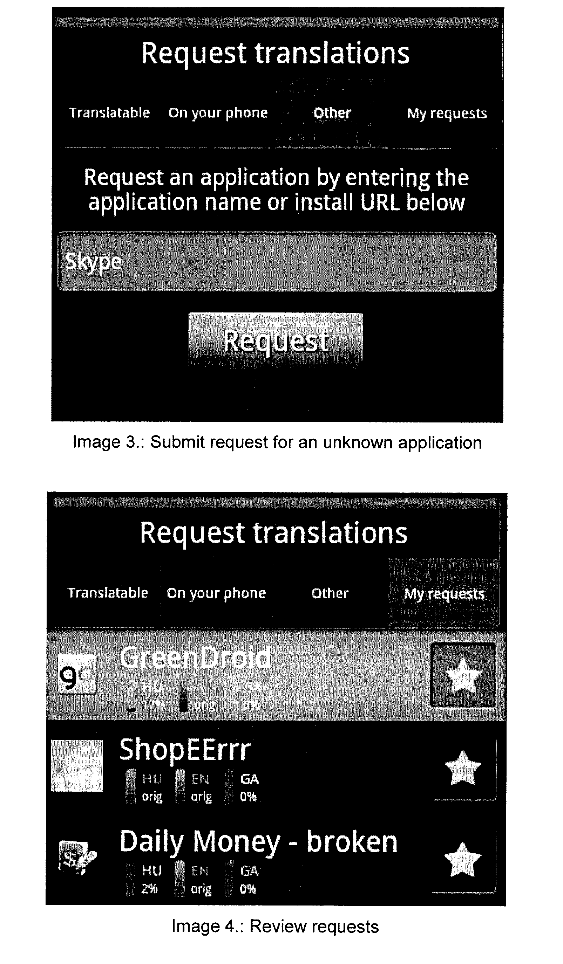

As shown in **Fig. 4****,** the user is enabled to review his/her translation requests as an application list. The rows of the list will represent a requested application containing as much information (name, icon, statuses of the translations) about the request as it is available to the system.

This list behaves exactly the same way as other application lists in the system (see How to submit requests in application lists).

### Components

### Request Submitter application

- can browse mobile device applications installed on its own Mobile Device or available on the Mobile Device Application Market

### Request Collection Server

- is installed on a physical or virtual server, running on a private or public network or cloud.

### Solution Database

- registered user information:
   o identifiers (username, password, etc.) - depends on the real embodiment
   o mother tongue - depends on the real embodiment
   o known languages
   o geographical location and home location of mobile device
   o transactions completed
- mobile device application information

Referring to **Fig. 4a****,** it represents a diagram of requesting Default or Customized and/or Personalized User Interface sets through Request Submitter function assigned (embedded, linked, plugged-in, etc.) to Applications, in accordance to the embodiment of the present invention. Those skilled in the art will recognize that numerous variations of assigning a function to an application are possible, both in form and function.

As it is known in the art, an Operating System **404** is running on the Hardware Infrastructure **402,** a representation of the Mobile Device **100** described on **Fig. 1****.** The Operating System offers to the User of the Device a set of Generic Languages **410.** User may choose from these, and set the OS Actual Language **406,** which selection determines the language of the User Interface of the Operating System itself, and the default settings of the Applications running on the Device.

Applications **408-1, 408-2,** ... **408-n** run on Operating System **404.**

Applications **408-1, 408-2, ... 408-n** typically include one or more User Interface sets.

Applications **408-1, 408-2, ... 408-n** contain each their own set of User Interfaces, and for each Application the User is allowed to ask using the Application-assigned Request Submitter function **416** a new language or customization. The respective Application **408-1, 408-2,...408-n** for which the Request Submitter function **416** has been initiated may or may not be running during the requesting process. This will depend on the particular properties of the Application **408-1, 408-2,...408-n** itself and/or will depend on the actual realization of the assignment of the Request Submitter function **416** to the Applications.

Referring to **Fig. 4b****,** it represents a diagram of requesting Default or Customized and/or Personalized User Interface sets through Request Submitter function assigned (embedded, linked, plugged-in, etc.) to the Operating System, in accordance to the embodiment of the present invention. Those skilled in the art will recognize that numerous variations of assigning a function to an Operating System are possible, both in form and function.

Functioning is very similar to the one presented at **Fig. 4a****.** The main difference is, that for each Application the User is allowed to ask using the OS-assigned request Submitter function **416** a new language or customization. The respective Application **408-1, 408-2,...408-n** for which the Request Submitter function **416** has been initiated may or may not be running during the requesting process. This will depend on the particular properties of the Application **408-1, 408-2,...408-n** itself and/or will depend on the actual realization of the assignment of the Request Submitter function **416** to the OS.

Referring to **Fig. 4c****,** it represents a diagram of requesting Default or Customized and/or Personalized User Interface sets through Request Submitter function realized as a separate application **416** running on the OS, in accordance to the embodiment of the present invention. Those skilled in the art will recognize that numerous variations of assigning a function to an Operating System are possible, both in form and function.

Functioning is very similar to the one presented at **Fig. 4a****.** The main difference is, that for each Application the User is allowed to ask using the separate application which realizes the Request Submitter function **416** a new language or customization. The respective Application **408-1, 408-2,...408-n** for which the Request Submitter function **416** has been initiated may or may not be running during the requesting process. This will depend on the particular properties of the Application **408-1, 408-2,...408-n** itself and/or will depend on the actual realization of the separate Request Submitter function **416.**

Referring to **Fig. 4d****,** it represents a diagram of requesting Default or Customized and/or Personalized User Interface sets through Request Submitter function **416** assigned (embedded, linked, plugged-in, etc.) to a different Application **418,** running on the OS, in accordance to the embodiment of the present invention. The Application **418** which incorporates the Request Submitter function **416** is different than the Applications **408-1, 408-2,..408-n,** for which the Request Submitter function **416** may be activated. Those skilled in the art will recognize that numerous variations of assigning a function to an Application are possible, both in form and function.

Functioning is very similar to the one presented at **Fig. 4a****.** The main difference is, that for each Application **408-1, 408-2,...408-n** the User is allowed to activate the Request Submitter function **416** assigned to the separate application **418.** The respective Application **408-1, 408-2,...408-n** for which the Request Submitter function **416** has been initiated may or may not be running during the requesting process. This will depend on the particular properties of the Application **408-1, 408-2,...408-n** itself and/or will depend on the actual realization of the other application **418** which incorporates the Request Submitter function **416.**

The solution names, pictures, methods, graphical solutions above are presented and used solely for the purpose of better understanding the present invention, and those skilled in the art will recognize, that many other possible names, graphical designs may be used to implement the invention.

## Claims

1. A method for collecting, sending and following Language, Customization and/or Personalization requests for Mobile Applications running on Mobile Devices, comprising:
sending to a Request Collection Server a language or customization request related to a translatable application used by a User, by activating a Request Submitter from the application,
sending with the use of Request Submitter a language or customization request to the Request Collection Server, related to any application installed on the Mobile Device,
sending with the use of Request Submitter a language or customization request to the Request Collection Server, related to any application by providing its access link,
checking the availability of different languages or customizations or the already sent requests with the Request Submitter related to any translatable application installed on the Mobile Device or while using a translatable application, by activating the Request Submitter from the Application, and
notifying the user about the availability of a previously requested language or customization.

2. A system for collecting, sending and following Language, Customization and/or Personalization requests for Mobile Applications running on Mobile Devices, preferably for performing the method of Claim 1, comprising:
means for sending to a Request Collection Server a language or customization request related to a translatable application used by a User, by activating a Request Submitter from the application,
means for sending with the use of Request Submitter a language or customization request to the Request Collection Server, related to any application installed on the Mobile Device,
means for sending with the use of Request Submitter a language or customization request to the Request Collection Server, related to any application by providing its access link,
means for checking the availability of different languages or customizations or the already sent requests with the Request Submitter related to any translatable application installed on the Mobile Device or while using a translatable application, by activating the Request Submitter from the Application, and
means for notifying the user about the availability of a previously requested language or customization.

3. A computer program product within: a Computer usable medium, a Mobile Device usable medium, for collecting, sending and following Language, Customization and/or Personalization requests for Mobile Applications running on Mobile Devices, preferably for performing the method of Claim 1, comprising:
instructions for sending to a Request Collection Server a language or customization request related to the translatable application used by a User, by activating a Request Submitter from the application,
instructions for sending with the use of Request Submitter a language or customization request to the Request Collection Server, related to any application installed on the Mobile Device,
instructions for sending with the use of Request Submitter a language or customization request to the Request Collection Server, related to any application by providing its access link,
instructions for checking the availability of different languages or customizations or the already sent requests with the Request Submitter related to any translatable application installed on the Mobile Device or while using a translatable application, by activating the Request Submitter from the Application, and
instructions for notifying the user about the availability of a previously requested language or customization.
